(19) **Europäisches Patentamt**

**European Patent Office**

**Office européen des brevets**

(11) **EP 1 318 420 B1**

(12) **EUROPEAN PATENT SPECIFICATION**

(45) Date of publication and mention of the grant of the patent:
**08.06.2005 Bulletin 2005/23**

(51) Int Cl.$^7$: **G02B 6/28**

(21) Application number: **02080122.1**

(22) Date of filing: **05.12.2002**

(54) **Optical coupler and arrayed waveguide grating (AWG) comprising the same**

Optischer Koppler und Gitter aus nebeneinanderliegenden Wellenleitern (AWG) mit diesem Koppler

Coupleur optique et réseau de diffraction formé par un réseau de guides d'onde (AWG) comprenant ce coupleur

(84) Designated Contracting States:
**DE FR GB**

(30) Priority: **07.12.2001 EP 01204779**
**04.03.2002 US 91216**

(43) Date of publication of application:
**11.06.2003 Bulletin 2003/24**

(73) Proprietor: **ThreeFive Photonics B.V.**
**3994 DA Houten (NL)**

(72) Inventors:
• **Steenbergen, Cornelis Adrianus Marinus**
**3723 RG Bilthoven (NL)**
• **Dessens, Marijn Pieter**
**2611 JR Delft (NL)**

(74) Representative: **Aalbers, Arnt Reinier**
**De Vries & Metman**
**Overschiestraat 180**
**1062 XK Amsterdam (NL)**

(56) References cited:
**EP-A- 0 598 622       EP-A- 0 785 449**
**US-A- 5 461 684**

• OKUDA E ET AL: "OPTICAL ACCESSOR AND STAR COUPLER COMPOSED OF PLANAR GRADIENT-INDEX GLASS WAVEGUIDE" , INTERNATIONAL CONFERENCE ON INTEGRATED OPTICS AND OPTICAL FIBRE COMMUNICATION (IOOC) AND EUROPEAN CONFERENCE ON OPTICAL COMMUNICATION (ECOC). VENICE, OCT. 1 - 4, 1985, GENOVA, IIC, IT, VOL. VOL. 1 CONF. 5, 11, PAGE(S) 423-426 XP000042583 * page 424, paragraph 3; figures 3,4 *
• RASMUSSEN T ET AL: "DESIGN AND PERFORMANCE EVALUATION OF 1-BY-64 MULTIMODE INTERFERENCEPOWER SPLITTER FOR OPTICAL COMMUNICATIONS" JOURNAL OF LIGHTWAVE TECHNOLOGY, IEEE. NEW YORK, US, vol. 13, no. 10, 1 October 1995 (1995-10-01), pages 2069-2074, XP000596088 ISSN: 0733-8724
• ICHIRO TANAKA ET AL: "GLASS WAVEGUIDE 1XN BRANCHING DEVICES" IEICE TRANSACTIONS ON COMMUNICATIONS, INSTITUTE OF ELECTRONICS INFORMATION AND COMM. ENG. TOKYO, JP, vol. E75 - B, no. 9, 1 September 1992 (1992-09-01), pages 886-892, XP000321324 ISSN: 0916-8516

**Description**

The invention pertains to an optical coupler comprising at least one input waveguide, a coupling region, and a plurality of output waveguides.

US patent 5,136,671 is directed to an NxN integrated optical interconnection apparatus comprising two so-called star couplers. In the description of US 5,136,671, it is explained that "optical switching, multiplexing, and de-multiplexing have been accomplished in the past by using an interconnection apparatus having a plurality of closely spaced input waveguides communicating with the input of a star coupler. The output of the star coupler communicates with an optical grating comprising a series of optical waveguides, each of the waveguides differing in length with respect to its nearest neighbour by a predetermined fixed amount. The grating is connected to the input of a second star coupler, the outputs of which form the outputs of the switching, multiplexing, and de-multiplexing apparatus."

It is recognised in US 5,136,671 that, "in order to achieve high efficiency power transfer between a relatively large number of input ports and a relatively large number of output ports, the input and output waveguides connected to the star couplers must be closely spaced in the vicinity of the star couplers. This causes a significant degree of mutual coupling between those adjacent input and output waveguides, producing increased undesirable cross-talk between the channels of the device and decreased efficiency in transferring optical power from the selected input ports to selected output ports of the apparatus."

The star couplers described in US 5,136,671 comprise a dielectric slab which forms a free space region having two curved, preferably circular, boundaries. The input waveguides and the waveguides in the grating are connected to the free space region in a substantially uniform fashion along the boundaries.

US patent 4,786,131 is directed to an MxN (star) coupler comprising a planar waveguide having a pair of opposed edges that serve as entrance and exit facets "for introducing and extracting electromagnetic radiation from said waveguide". The planar waveguide is structured to confine the radiation propagating therein in a single mode in its depths without confining it in its width so that, in its width, radiation propagates as an expanding wavefront.

Although the phase distribution at the output plane of the star couplers according to these prior art documents can be adequately matched to the output waveguides, the amplitude distribution cannot. As a result of such amplitude mismatch, a considerable amount of the electromagnetic radiation will be coupled in the areas between the output waveguides, in turn resulting in insertion losses and additional cross-talk, especially when applied in arrayed waveguide gratings.

It is an object of the present invention to provide an improved optical coupler, wherein the amplitude distribution can be matched more accurately to the output waveguides.

To this end, the coupler according to the first paragraph is characterised in accordance with claim 1.

It is preferred that also the width of the waveguides in at least part of their lengths in the coupling region increases, preferably gradually, and/or that the width of the gaps between the waveguides in the coupling region is at least substantially constant.

In a further preferred embodiment the centre lines of at least some of the gaps between the waveguides in the coupling region follow the lines of a Gaussian diffraction pattern in accordance with the following set of equations (E1) or a linearised version thereof:

$$w(z) = w_k \sqrt{1 + (\alpha z)^2} \quad ; \quad \alpha = \frac{(\lambda / n_{\textit{eff}})}{\pi w_0^2} \quad ; \quad R = z\left(1 + \left(\frac{1}{\alpha z}\right)^2\right) \qquad \textrm{E1}$$

where z is the longitudinal propagation position; $w(z)$ is the z-dependent lateral position of the central line of the $k^{th}$ gap; $w_k$ is the position of the centre of the $k^{th}$ gap at z=0; $w_0$ is the beam waist at z=0; $\lambda$ is the wavelength in vacuum, $n_{eff}$ is the effective index and R is the radius of curvature of the phase front.

In a coupler designed using equations E1, the sum of the widths of the waveguides and gaps, gradually increases in the propagation direction and insertion loss and cross-talk are further reduced.

The amplitude distribution and, hence the distribution of power, over the output waveguides can be further modified, e.g. equalised so as to obtain a very effective power coupler, by adjusting the positions, in the propagation direction, where centre lines of the gaps between the waveguides in the coupling region start to follow the lines of a diffraction pattern. This is preferably done by means of the following set of equations (E2) or a linearised version thereof:

$$w(z) = \begin{cases} w_k & , \quad \textit{for } z < z_k \\ w_k \sqrt{1 + [\alpha(z - z_k)]^2} & , \quad \textit{for } z >= z_k \end{cases} \quad ; \quad \alpha = \frac{(\lambda / n_{\textit{eff}})}{\pi w_0{}^2} \qquad E2$$

wherein $z_k$ is the longitudinal position of the $k^{th}$ gap.

Thus, strong coupling between adjacent waveguides in the inner part of the coupling region is ensured. The outer waveguides widen gradually, thereby collecting the light entering from the inner part of the coupling region.

In an especially preferred embodiment, the coupler, when electromagnetic radiation of a wavelength at which the coupler is designed to operate is launched in one of the inputs, generates an amplitude distribution, which exhibits, in a lateral direction, a plurality of peeks and wherein the output waveguides are positioned at the lateral positions of these peaks. Thus, the amount of radiation coupling into the gaps between the waveguides as well as cross-talk are further reduced.

In general, it is preferred that all the above-mentioned waveguides in the coupler according to the present invention are planar waveguides.

The invention also pertains to an Arrayed Waveguide Grating (AWG), also known as *inter alia* Phasar, Phaseur, and Waveguide Grating Router, comprising the present coupler. The advantages of the coupler are especially noticeable in AWGs, since even small deviations from the amplitude and phase distributions for which such a device was designed can result in substantial losses or render it inoperative all together.

For the sake of completeness, it is noted that European patent application 0 717 295 discloses an MxO multiplex/de-multiplex device comprising two evanescent wave couplers each comprising an array of fused optical fibres. The phase distribution at the output of such couplers does not describe a circular or elliptic phase front, which are therefore less suitable for use in AWGs. This is especially true for wavelength de-multiplexers designed to operate at a broad wavelength range.

EP 598 622 relates to "an optical circuit in which a plurality of branched optical waveguides are connected to the light receiving side and the light ejecting side of a main optical waveguide, which mixes the entering light". E. Okuda *et al* relates to glass waveguide 1xN branching devices for fiber-optic networks. Ichiro Tanaka *et al* relates to 1xN branching devices, comprising a tree configuration of Y-shape branches to split input optical power equally to N output ports. US 5,461,684 relates to a digital switch comprising an input waveguide and two divergent output waveguides.

The invention will now be explained in more detail with reference to the drawings in which several preferred embodiments are schematically shown.

Figures 1A and 1B show a cross-section of a typical waveguide structure respectively of a mode propagating therein.

Figures 2A to 2C illustrate the effects of the width of a waveguide on the effective width of a mode propagating therein.

Figure 3 shows a top view and corresponding cross-section of a first embodiment of the coupler according to the present invention.

Figure 4 shows a top view and corresponding cross-sections of a coupling region suitable for use in the coupler according to figure 3.

Figures 5A and 5B show an amplitude distribution generated by respectively a prior art coupler and a coupler according to the present invention.

Figure 6 shows a cross-section and a top plan view of a second embodiment according to the present invention.

Figure 7 shows a top plan view and corresponding cross-sections of a third embodiment according to the present invention.

Figure 7A shows a variation of the embodiment according to figure 7.

Figures 8A to 8E show a top plan view and corresponding cross-sections of a fourth embodiment according to the present invention.

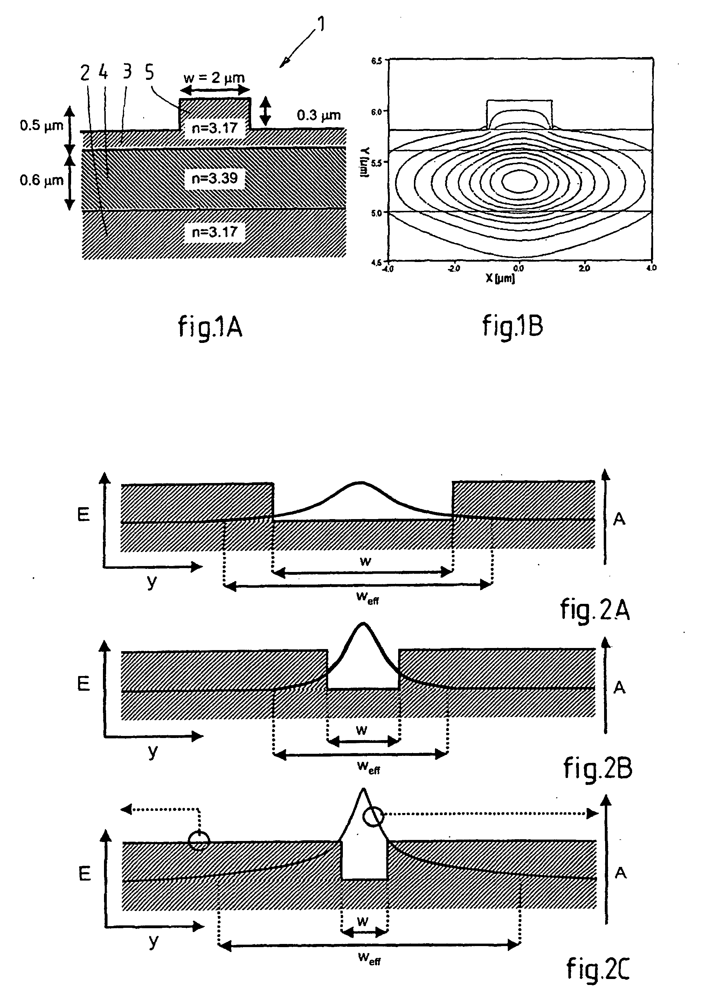

An example of a typical waveguide structure 1 is shown in figure 1A and comprises a substrate 2 and a top layer 3 of InP (having a refractive index of n=3.17) sandwiching a core layer 4 of InGaAsP (having a refractive index of n=3.39). Other types of materials, e.g. silica on silicon (SiO2/Si), siliconoxintride (SiON), silicon on insulator (SOI), and polymers, are equally suitable. The top surface of the top layer 2 exhibits a ridge 5, which causes a lower energy state region in the structure and thus defines a quantum well, i.e. in this case an optical waveguide. Launching electromagnetic radiation having a wavelength of e.g. 1.5 µm in the waveguide results in a mode having a field distribution as shown in figure 1B.

Further, figures 2A to 2C illustrate a phenomenon that is advantageously employed in the preferred embodiments of the present invention. In a very wide waveguide (figure 2A), the effective field width, $w_{eff}$, of a mode propagating in the waveguide substantially corresponds to the width, w, of the said waveguide. The effective field width decreases with a decreasing width of the waveguide (figure 2B) down to and including the critical width of the waveguide. Beyond the critical width (figure 2C), the effective field width of the mode increases considerably which, in case of a plurality of closely spaced waveguides, results in a strong coupling of the said waveguides. The field profile of the entire structure can no longer be described by the sum of the individual modal field profiles, but has to be constructed as the sum of fields of the so-called supermodes of the total waveguide structure.

It is noted that, within the framework of the invention, the effective field width is defined as being equal to twice the distance from the centre of the mode to the lateral position where the amplitude of the mode has dropped to a value equal to the amplitude at the centre of the mode divided by e ($\approx$ 2.7183). The above-mentioned critical width of a waveguide is dependent on the index contrast of the waveguide at the wavelength or wavelength range at which it was designed to operate and is defined as the width where the width of the mode propagating therein is at a minimum.

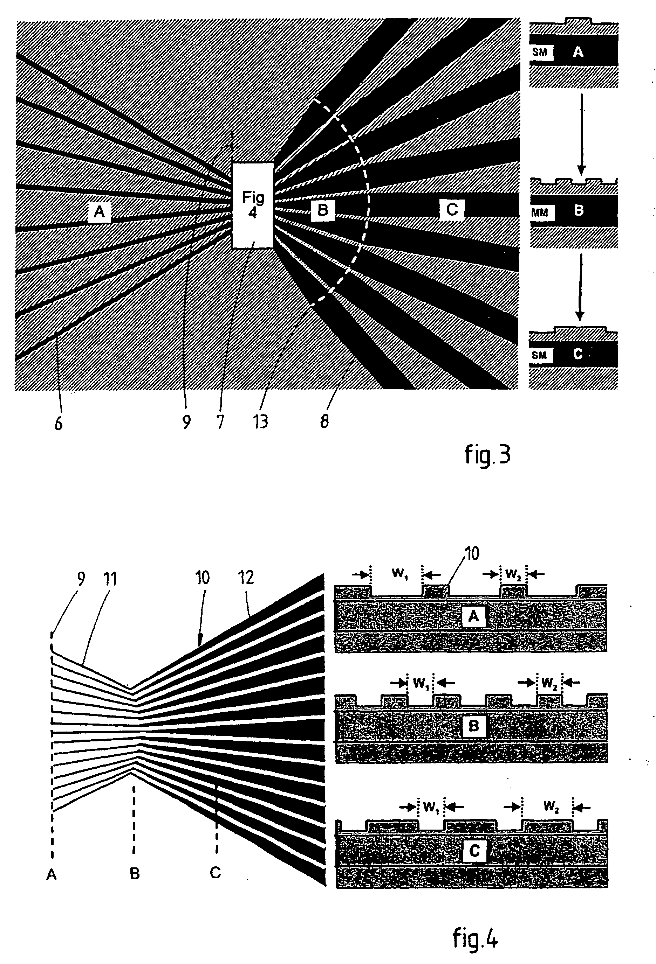

Figure 3 shows a first preferred embodiment according to the present invention comprising a plurality of single-mode (SM) or multi-mode (MM) input waveguides 6, a multi-mode (MM) coupling region 7, of which an example is shown in more detail in figure 4, and a plurality of single-mode or multi-mode output waveguides 8. The input waveguides 6 (in region A) are de-coupled and converge towards an input plane 9 of the coupling region (B). The coupling region according to figure 4 comprises waveguides 10, each having a first portion 11, which converges from the input plane 9 towards a transition (sub-region D), and a second portion 12, which diverges towards a circular output plane 13 (dotted line in figure 3). At this output plane 13, the said second portions 12 are connected to the output waveguides 8.

Further, the first portions 11 all have a constant width ('$w_2$' on the right-hand side of figure 4) that is less than the critical width at the wavelength at which the coupler is designed to operate, in this case 1.5 $\mu$m. At the transition, the width of each of the first portions 11 of the waveguides 10 is substantially equal to the width ($w_1$) of the gaps, resulting in the sum of supermodes mentioned above.

The gaps between the second portions 12 are of constant width ($w_1$) and follow centre lines calculated by a linearised version of equations E1 mentioned above. Accordingly, the width ($w_2$) of each of the second portions 12 of the waveguides 10 increases gradually, initially to a width larger than the critical width and after that to a width equal to that of its respective output waveguide 8. As a result, the waveguides 10 are gradually de-coupled.

As the said widths $w_1$, $w_2$, need not be in excess of e.g. 1 $\mu$m, the manufacture of the coupler in hand does not require extreme lithographic resolutions and thus can be manufactured by means of a conventional and relatively straightforward lithographic process.

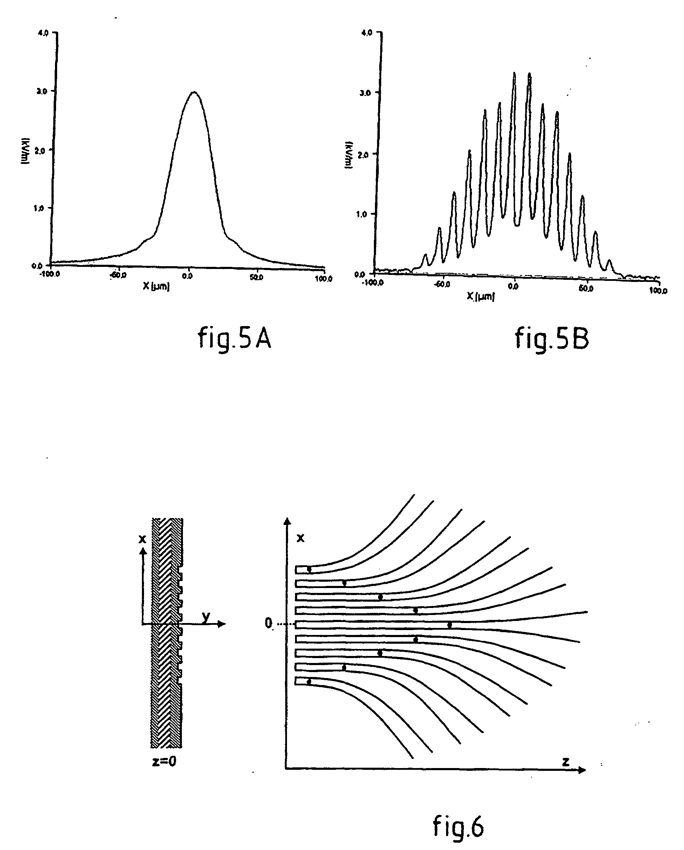

A simulation using the Beam Propagation Method (BPM) was carried out for a prior art star coupler and for the coupler according to figures 3 and 4 discussed above. Figures 5A (prior art) and 5B (invention) depict the respective amplitude distributions at the output planes of the couplers. Figure 5A shows a smooth distribution, whereas figure 5B shows a distribution having several peaks. These peaks are in register with the output waveguides 8, i.e. the amplitude is high where the coupling region is connected to the output waveguides and low at the locations of the gaps between the output waveguides 8 where losses are likely to occur.

Figure 6 shows part of an alternative to the coupling region shown in figure 4. The converging first portions (not shown) of the waveguides in the coupling region are substantially identical to those in the coupler according to figure 4. However, the centre lines of the diverging second sections were calculated by means equations E2 cited above. As a result, the waveguides initially run straight over a distance, which is largest for the centre waveguide and smaller towards the edges of the coupling region and, in turn, the amplitude distribution at the output plane flattens and power is distributed more evenly over the outputs.

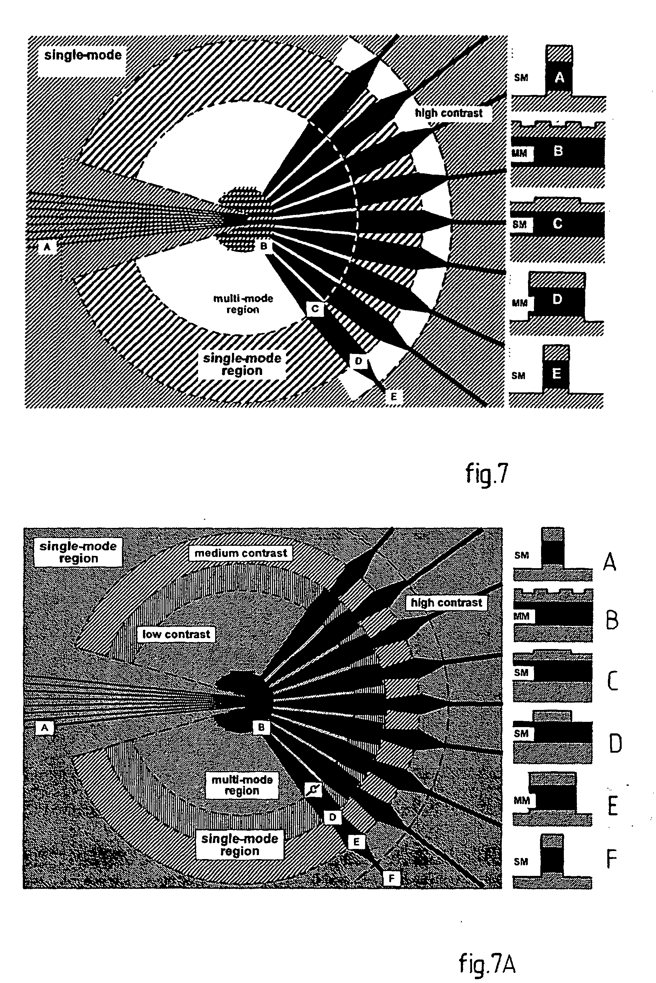

Figure 7 shows a third preferred device according to the present invention, which comprises high contrast input and output waveguides. The high contrast inputs (A) are coupled directly into the coupling region (B), which itself is similar to that shown in figure 3. For the high contrast output waveguides (E), it is preferred that transitional sections are provided, which each comprise a (relatively broad) low confinement section (C) and a matched high confinement tapered section (D) which is coupled to a respective output waveguide.

Depending on the configuration of a particular device it may be desirable to employ high confinement tapered sections (D) which, at it relatively broad end, are significantly wider than the low confinement sections (C). This is a result of the fact that the optical mode in the low confinement sections (C) will be larger than the physical waveguide width of these section (C), whereas in the high confinement tapered sections (D) the optical mode is completely confined within the physical waveguide.

In such configurations, it may be necessary to further extend the low confinement sections (C) so as to provide sufficient lateral space for the high confinement tapered sections (D). Figure 7A shows a further preferred variant of the device according to figure 7, wherein the transition between the low confinement sections (C) and the high contrast output waveguides (F) includes an intermediate region (E) with medium confinement.

The tapered sections (D) in the intermediate region (E) of medium confinement can, at the transition with the low confinement sections (C), either be configured wider than the low confinement sections (C), although still narrower than in devices where no intermediate region (E) of medium confinement is employed, or narrower, at a width less than the critical width thus effecting a widing of the mode propagating as explained above. In the latter embodiment, a narrower waveguide width means that the lengths of the low confinement sections (C) can be reduced significantly resulting in smaller overall dimensions of the optical coupler according to the present invention.

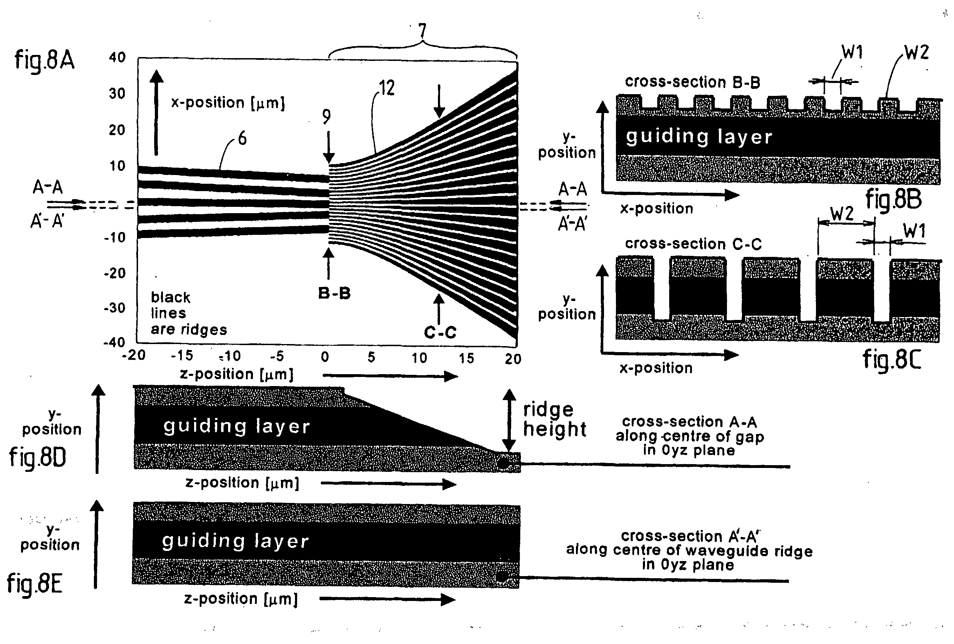

Figure 8A is a schematic diagram that illustrates a fourth preferred embodiment, which includes a plurality of single-mode (SM) or multi-mode (MM) input waveguides 6 which is optically coupled with or connected to a plurality of diverging single-mode or multi-mode waveguides 12 at an input (B-B). At an output plane (not shown), the diverging waveguides 12 are optically connected to output waveguides. The width w2 of each of the diverging waveguides 12 is initially less than the critical width and then gradually increases to a width that is -larger than the critical width and after that to a width equal to that of its respective output waveguide to this end, the gaps between the waveguides 12 follow a pattern is accordance with equations E1

$$x = w_i \sqrt{1 + (\alpha z)^2} \; ; \; for \; x > 0 \; a = \frac{(\lambda/n_{eff})}{\pi w_0}; \; w_i = i(gap + wg); \; i = -10...10$$

The values used in the $w_0$ = 1.0 µm; n = 3; $\lambda$ = 1.545 µm; Wg = 0.5 µm; and gap = 0.5 µm.

Figures 8B and 8C respectively show a cross sectional view of the waveguides along B-B and C-C as indicated by a corresponding pair of arrows. As shown in Figure 8B, across sectional view at the interface B-B shows that an inter-waveguide gap width w1 and a waveguide width w2 are substantially equal. On the other hand, a cross sectional view at the diverging portion C-C shows that an inter-waveguide gap width w1 is smaller than a waveguide width w2.

Figures 8D and 8E respectively show a cross sectional view the waveguides along dotted lines A-A and A'-A' as indicated by a corresponding pair of arrows. As shown in Figure 8D, a cross sectional view along the line A-A shows that an inter-waveguide gap gradually deepens as the waveguides 12 diverges. On the other hand, a cross sectional view along the line A'-A' shows that the waveguide surface of the waveguides 6 and 12 maintain the substantially horizontal plane.

From the above explanations, it will be clear that in the optical couplers according to the present invention both the amplitude distribution and a phase distribution, at least at the output plane, can be adjusted to accurately match the output waveguides and thus to operate at relatively low loss and cross-talk.

The invention is not restricted to the above-described embodiments, which can be varied in a number of ways within the scope of the claims.

**Claims**

1.  Optical coupler comprising at least one input waveguide (6), a coupling region (7), and a plurality of output waveguides (8), wherein the coupling region (7) comprises a plurality of adjacent coupled waveguides (10), which, over at least part of their lengths, diverge with respect to each other in the propagation direction of electromagnetic radiation launched in the said input waveguide (6), **characterized in that** at least some of the coupled waveguides (10) comprise a section (11; 12) having a width that is less than the critical width of the waveguides (10) at the wavelength(s) at which the coupler is designed to operate, the critical width being the width for which the width of the mode propagating therein is at a minimum.

2.  Optical coupler according to claim 1, wherein the width of the waveguides (12) in said at least part of their lengths in the coupling region (7) increases.

3.  Optical coupler according to claim 1 or 2, wherein the width of at least part of the gaps between the waveguides (10) in the coupling region (7) is at least substantially constant.

4.  Optical coupler according to any one of the preceding claims, wherein the centre lines of at least some of the gaps between the waveguides (10) in the coupling region (7) follow the lines of a Gaussian field according to equations E1 or a linearised version thereof:

$$w(z) = w_k \sqrt{1 + (\alpha z)^2} \quad ; \quad \alpha \approx \frac{(\lambda / n_{\text{eff}})}{\pi w_0^2} \quad ; \quad R = z \left( 1 + \left( \frac{1}{\alpha z} \right)^2 \right) \qquad E1$$

where z is the longitudinal propagation position; $w(z)$ is the z-dependent lateral position of the central line of the $k^{th}$ gap; $w_k$ is the position of the centre of the $k^{th}$ gap at z=0; $w_o$ is the beam waist at z=0; $\lambda$ is the wavelength in vacuum, $n_{eff}$ is the effective index and R is the radius of curvature of the phase front.

5. Optical coupler according to any one of the preceding claims, wherein the centre lines of the gaps between the waveguides (10) in the coupling region (7) follow the lines of a field in accordance with equations E2 or a linearised version of those lines:

$$w(z) = \begin{cases} w_k & , \quad \text{for } z < z_k \\ w_k \sqrt{1 + [\alpha(z - z_k)]^2} & , \quad \text{for } z >= z_k \end{cases} \quad ; \quad \alpha = \frac{(\lambda / n_{\text{eff}})}{\pi w_0^2} \qquad E2$$

where z is the longitudinal propagation position; zk is the logitudinal position of the $k^{th}$ gap; $w(z)$ is the z-dependent lateral position of the central line of the $k^{th}$ gap; $w_k$ is the position of the centre of the $k^{th}$ gap at z=0; $w_o$ is the beam waist at z=0; $\lambda$ is the wavelength in vacuum, $n_{eff}$ is the effective index and R is the radius of curvature of the phase front.

6. Optical coupler according to any one of the preceding claims, wherein the waveguides (10) initially converge (11) in the propagation direction and subsequently diverge (12).

7. Optical coupler according to any one of the preceding claims, wherein the coupler, when electromagnetic radiation of a wavelength at which the coupler is designed to operate is launched in one of the inputs (6), generates an optical field with an amplitude distribution, which exhibits, in a lateral direction, a plurality of peaks, the optical conpler being designed such that the beginning of the output waveguides (8) are positioned at the lateral positions of these peaks.

8. Optical coupler according to any one of the preceding claims, wherein all the said waveguides (6, 10, 8) are planar waveguides.

9. Arrayed waveguide grating comprising at least one optical coupler according to any one of the preceding claims.

**Patentansprüche**

1. Optischer Koppler, umfassend mindestens einen Eingangswellenleiter (6), eine Kopplungsregion (7) und eine Vielzahl von Ausgangswellenleitern (8), wobei die Kopplungsregion (7) eine Vielzahl benachbarter gekoppelter Wellenleiter (10) umfasst, die über mindestens einen Teil ihrer Längen in Bezug aufeinander in der Ausbreitungsrichtung von elektromagnetischer Strahlung divergieren, die in dem Eingangswellenleiter (6) gestartet wird, **gekennzeichnet dadurch, dass** mindestens einige der gekoppelten Wellenleiter (10) eine Sektion (11; 12) mit einer Breite umfassen, die kleiner als die kritische Breite der Wellenleiter (10) in der (den) Wellenlänge(n) ist, in der (denen) der Koppler gestaltet ist zu arbeiten, wobei die kritische Breite die Breite ist, für die die Breite der Modusausbreitung darin in einem Minimum ist.

2. Optischer Koppler nach Anspruch 1, wobei die Breite der Wellenleiter (12) in dem mindesten Teil ihrer Längen in der Kopplungsregion (7) ansteigt.

3. Optischer Koppler nach Anspruch 1 oder 2, wobei die Breite von mindestens einem Teil der Lücken zwischen den Wellenleitern (10) in der Kopplungsregion (7) mindestens im wesentlichen konstant ist.

4. Optischer Koppler nach einem beliebigen der vorangehenden Ansprüche, wobei die Achsen von mindestens einigen der Lücken zwischen den Wellenleitern (10) in der Kopplungsregion (7) den Linien von Gauss'schen Feldgleichungen E1 oder einer linearisierten Version davon folgen:

$$w(z)=w_k\sqrt{1+(\alpha z)^2}\;;\quad \alpha=\frac{(\lambda/n_{eff})}{\pi w_0{}^2}\;;\quad R=z\left(1+\left(\frac{1}{\alpha z}\right)^2\right)\;E1,$$

wobei z die Längsausbreitungsposition ist; w(z) die z-abhängige seitliche Position der Achse der $k^{ten}$ Lücke ist; $w_k$ die Position der Mitte der $k^{ten}$ Lücke bei z = 0 ist; $w_0$ der Strahlenmittelteil bei z = 0 ist; $\lambda$ die Wellenlänge im Vakuum ist; $n_{eff}$ der effektive Index ist und R der Radius einer Krümmung der Phasenfront ist.

5. Optischer Koppler nach einem beliebigen der vorangehenden Ansprüche, wobei die Achsen der Lücken zwischen den Wellenleitern (10) in der Kopplungsregion (7) den Linien eines Feldes in Übereinstimmung mit Gleichungen E2 oder einer linearisierten Version von jenen Linien folgen:

$$w(z)=\begin{cases}w_k & ,\;f\ddot{u}r\;z<z_k\\ w_k\sqrt{1+[\alpha(z-z_k)]^2} & ,\;f\ddot{u}r\;z>=z_k\end{cases}\;;\quad \alpha=\frac{(\lambda/n_{eff})}{\pi w_0{}^2}\quad E2,$$

wobei z die Längsausbreitungsposition ist; $z_k$ die Längsposition der $k^{ten}$ Lücke ist; w(z) die z-abhängige seitliche Position der Achse der $k^{ten}$ Lücke ist; $w_k$ die Position der Mitte der $k^{ten}$ Lücke bei z = 0 ist; $w_0$ der Strahlenmittelteil bei z = 0 ist; $\lambda$ die Wellenlänge im Vakuum ist; $n_{eff}$ der effektive Index ist und R der Radius einer Krümmung der Phasenfront ist.

6. Optischer Koppler nach einem beliebigen der vorangehenden Ansprüche, wobei die Wellenleiter (10) anfangs in der Ausbreitungsrichtung konvergieren (11) und anschließend divergieren (12).

7. Optischer Koppler nach einem beliebigen der vorangehenden Ansprüche, wobei der Koppler, wenn elektromagnetische Strahlung einer Wellenlänge, in der der Koppler gestaltet ist zu arbeiten, in einem der Eingänge (6) gestartet wird, ein optisches Feld mit einer Amplitudenverteilung generiert, die in einer seitlichen Richtung eine Vielzahl von Spitzen aufweist, wobei der optische Koppler derart gestaltet ist, dass der Beginn von den Ausgangswellenleitern (8) in den seitlichen Positionen dieser Spitzen positioniert sind.

8. Optischer Koppler nach einem beliebigen der vorangehenden Ansprüche, wobei alle der Wellenleiter (6, 10, 8) planare Wellenleiter sind.

9. Angeordnetes Wellenleitergitter, umfassend mindestens einen optischen Koppler nach einem beliebigen der vorangehenden Ansprüche.

**Revendications**

1. Coupleur optique comprenant au moins un guide d'ondes d'entrée (6), une région de couplage (7) et une pluralité de guides d'ondes de sortie (8), dans lequel la région de couplage (7) comprend une pluralité de guides d'ondes couplés adjacents (10) qui, sur au moins une partie de leurs longueurs, divergent les uns par rapport aux autres dans la direction de propagation du rayonnement électromagnétique envoyé dans ledit guide d'ondes d'entrée (6), **caractérisé en ce qu'**au moins l'un des guides d'ondes couplés (10) comprend une section (11;12) possédant une largeur qui est inférieure la largeur critique des guides d'ondes (10) pour la ou les longueurs d'onde pour lesquelles le coupleur est conçu pour fonctionner, la largeur critique étant la largeur pour laquelle la largeur du mode se propageant dans le coupleur est minimale.

2. Coupleur optique selon la revendication 1, dans lequel la largeur des guides d'ondes (12) dans ladite au moins une partie de leurs longueurs dans la région de couplage (7) augmente.

3. Coupleur optique selon la revendication 1 ou 2, dans lequel la largeur d'au moins une partie des interstices entre les guides d'ondes (10) dans la région de couplage (7) est au moins sensiblement constante.

4. Coupleur optique selon l'une quelconque des revendications précédentes, dans lequel les lignes centrales d'au moins certains des interstices entre les guides d'ondes (10) dans la région de couplage (7) suivent les lignes d'un champ gaussien, conformément aux équations E1 ou à une version linéarisée de ces équations :

$$w(z) = w_k \sqrt{1 + (\alpha z)^2} \quad ; \quad \alpha = \frac{(\lambda/n_{eff})}{\pi w_0{}^2} ; \quad R = z\left(1 + \left(\frac{1}{\alpha z}\right)^2\right) \quad E1,$$

z étant la position de propagation longitudinale; w(z) étant la position latérale, qui dépend de z, de la ligne centrale du k-ème interstice; $w_k$ étant la position du centre du k-ème interstice pour z=0; $w_0$ étant le diamètre du faisceau pour z=0; $\lambda$ étant la longueur d'onde dans le vide, $n_{eff}$ étant l'indice effectif et R étant le rayon de courbure du front de phase.

5. Coupleur optique selon l'une quelconque des revendications précédentes, dans lequel les lignes centrales des interstices entre les guides d'ondes (10) dans la région de couplage (7) suivent les lignes d'un champ conformément aux équations E2 ou à une version linéarisée de ces lignes :

$$w(z) = \begin{cases} w_k & , \text{ pour } z<z_k \\ w_k \sqrt{1+[a(z-zk)]^2} & , \text{ pour } z>= z_k, \end{cases} \quad ; \quad \alpha = \frac{(\lambda/n_{eff})}{\pi w_0{}^2} \xrightarrow{E2} ,$$

z étant la position de propagation longitudinale; $z_k$ étant la position longitudinale du k-ème interstice; w(z) étant la position latérale, qui dépend de z, de la ligne centrale du k-ème interstice; $w_k$ étant la position du centre du k-ème interstice pour z=0; $w_0$ étant le diamètre du faisceau pour z=0; $\lambda$ étant la longueur d'onde dans le vide, $n_{eff}$ étant l'indice effectif et R étant le rayon de courbure du front de phase.

6. Coupleur optique selon l'une quelconque des revendications précédentes, dans lequel les guides d'ondes (10) convergent initialement (11) dans la direction de propagation et ensuite divergent (12).

7. Coupleur optique selon l'une quelconque des revendications précédentes, dans lequel, lorsqu'un rayonnement électromagnétique ayant une longueur d'onde pour laquelle le coupleur est conçu pour fonctionner, est envoyé à l'une des entrées (6), le coupleur génère un champ optique possédant une distribution d'amplitude qui présente, dans une direction latérale, une pluralité de pics, le coupleur optique étant conçu de telle sorte que le début des guides d'ondes de sortie (8) sont positionnés dans les positions latérales de ces pics.

8. Coupleur optique selon l'une quelconque des revendications précédentes, dans lequel l'ensemble des guides d'ondes optiques (6,10,8) sont des guides d'ondes plans.

9. Réseau ordonné de guides d'ondes comprenant au moins un coupleur optique selon l'une quelconque des revendications précédentes.

fig.1A

fig.1B

fig.2A

fig.2B

fig.2C

fig.3

fig.4

fig.5A

fig.5B

fig.6

fig.7

fig.7A

fig.8A

x-position [μm]

7

12

9

6

black lines are ridges

B-B

C-C

A-A

A'-A'

z-position [μm]

cross-section B-B

W1   W2

guiding layer

A-A

x-position

fig.8B

A'-A'

cross-section C-C

W2

W1

y-position

x-position

fig.8C

y-position

guiding layer

ridge height

cross-section A-A along centre of gap in 0yz plane

fig.8D

z-position [μm]

y-position

guiding layer

cross-section A'-A' along centre of waveguide ridge in 0yz plane

fig.8E

z-position [μm]

EP 1 318 420 B1